# EUROPEAN PATENT SPECIFICATION

(11) **EP 2 810 330 B1**
(45) Date of publication and mention of the grant of the patent: **24.08.2016**
(21) Application number: 13743032.8
(22) Date of filing: 01.02.2013
(51) Int. Cl.: H01M 8/12, H01M 8/02, H01B 1/08, C04B 35/01

(54) **COMPOSITE ELECTROLYTE CONSISTING OF FULLY STABILIZED ZIRCONIA AND PARTIALLY STABILIZED ZIRCONIA**
ZUSAMMENGESETZTER ELEKTROLYT AUS VOLLSTÄNDIG STABILISIERTEM ZIRKONIUMOXID UND TEILSTABILISIERTEM ZIRKONIUMOXID
ÉLECTROLYTE COMPOSITE CONSTITUÉ DE ZIRCONE ENTIÈREMENT STABILISÉE ET DE ZIRCONE PARTIELLEMENT STABILISÉE

(30) Priority: 01.02.2012 US 201261593596 P
(43) Date of publication of application: 10.12.2014
(73) Proprietor: Carleton Life Support Systems Inc., Davenport, IA 52804-1203 (US)
(72) Inventor: WU, Zhonglin, Bettendorf, IA 52722 (US); MONZYK, Courtney, J., Davenport, IA 52803 (US)
(74) Representative: Carpmael, Robert Maurice Charles
(86) International application number: PCT/US2013/024428
(87) International publication number: WO 2013/116712

(56) References cited:
- JP-A- H06 211 570
- JP-A- 2005 322 547
- US-A1- 2007 042 225
- US-A1- 2008 261 099
- US-A1- 2008 261 099
- US-B2- 7 871 735
- CHAROJROCHKUL S ET AL: "Properties of Yttria Doped Zirconia Composites for Solid Oxide Fuel Cells", ECS TRANSACTIONS, ELECTROCHEMICAL SOCIETY, US, vol. 7, no. 1, 1 January 2007 (2007-01-01) , pages 2085-2092, XP007914215, ISSN: 1938-5862, DOI: 10.1149/1.2729322

## Description

### BACKGROUND OF THE INVENTION

Performance of electrochemical devices, such as solid oxide fuel cells and ceramic oxygen separation membranes, is typically limited by the electrical resistance of the solid electrolyte materials. Solid electrolyte materials with high ionic conductivity will not only increase the electrical performance of the electrochemical devices, but also allow the device to run at a lower temperature, which may enable use of cheaper metallic components. Yttria (Y₂O₃) stabilized zirconia (YSZ) has long been investigated for these applications. Over the last several years, scandium oxide (Sc₂O₃) stabilized zirconia (ScSZ) has emerged as a viable electrolyte material to replace YSZ for these devices. The stabilization of zirconia can be full or partial, depending on the type and amount of the dopants (such as yttria). For applications requiring high mechanical strength and toughness, such as Applicant's Ceramic Oxygen Generation Systems (COGS), a fully stabilized zirconia compound may not be the best candidate due to its relatively low strength and its lack of a toughening mechanism. Partially stabilized zirconia with lower dopant contents have excellent mechanical strength and toughness, but also have lower ionic conductivity.

Several zirconia based electrolyte materials were evaluated, both fully stabilized (such as 8YSZ and 10Sc1CeSZ) and partially stabilized (such as 3YSZ, 6Sc1CeSZ and 6ScSZ). Ceramic Oxygen Generation System units with 6Sc1CeSZ electrolyte have been manufactured and have proven their suitability for field applications under severe environmental conditions. However, the conductivity of 6Sc1 CeSZ is far below that of 10Sc1CeSZ, resulting in lower performance at the same operation conditions.

There therefore remains a need for a solid electrolyte with optimized conductivity and mechanical strength suitable for use in solid state electrochemical devices such as Ceramic Oxygen Generation Systems.

In US 2008/0261099A1, a YZS-ScCeSZ composite electrolyte is disclosed.

### BRIEF SUMMARY OF THE INVENTION

The invention teaches composite electrolyte materials comprising at least one component from fully stabilized zirconia (such as 10Sc1 CeSZ) and at least one component from partially stabilized zirconia (such as 6Sc1CeSZ) as the electrolyte material for solid state electrochemical devices.

### BRIEF DESCRIPTION OF THE DRAWING

Figure 1 is a graph showing conductivity of 10Sc1CeSZ - 6Sc1CeSZ composites as a function of 10Sc1CeSZ content; and
Figure 2 is a graph showing the bar breaking strength of 10Sc1 CeSZ - 6Sc1CeSZ composites as a function of 10Sc1CeSZ content.
Figure 3 is a chart showing electrolyte performance degradation.

### DETAILED DESCRIPTION OF PREFERRED EMBODIMENTS

This invention teaches composite electrolyte materials composed at least one component from fully stabilized zirconia (such as 10Sc1CeSZ, for example) and at least one component from partially stabilized zirconia (such as 6Sc1 CeSZ, for example) as the electrolyte material for solid state electrochemical devices. The composite can be obtained through mixing electrolyte powders of fully stabilized zirconia and electrolyte powders from partially stabilized zirconia and following typical ceramic manufacturing processes. For example, 10Sc1CeSZ powder and 6Sc1CeSZ powder in a weight ratio between 1:10 to 10:1 can be mixed together. The mixture can then be processed to make components for solid state electrochemical devices. The preferred weight ratio of 10Sc1CeSZ to 6Sc1 CeSZ in the mixture is 3:7 to 7:3.

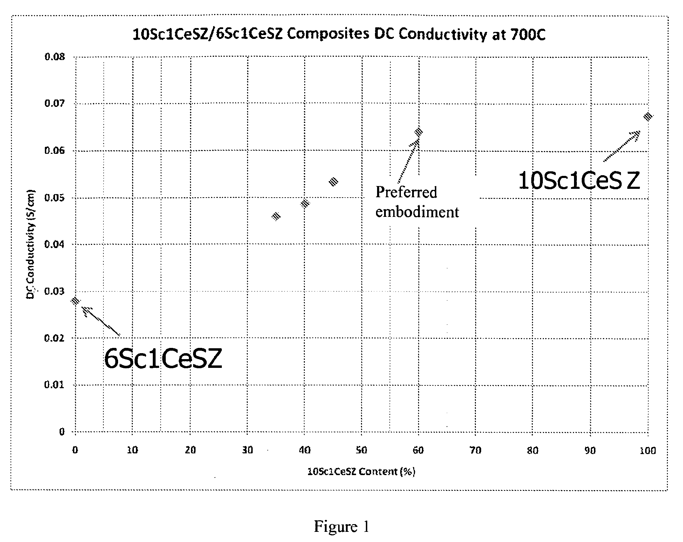

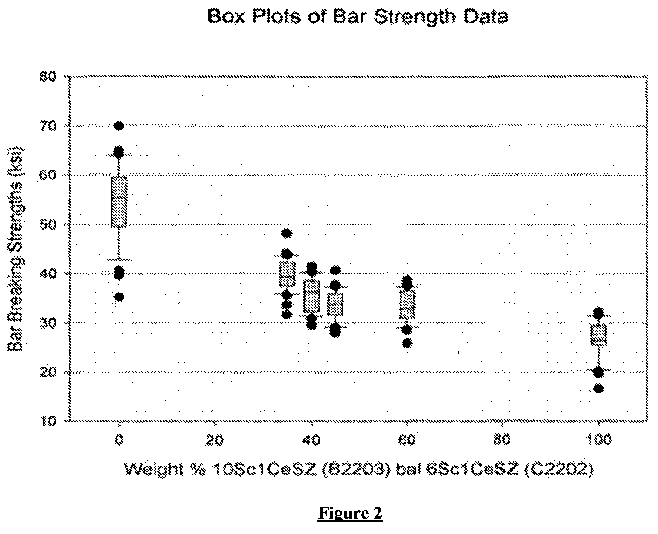

Disks and bar samples with different 10Sc1CeSZ: 6Sc1CeSZ ratios were made to evaluate the ionic conductivity and the strength of the composite. Conductivity was measured using a DC method at a current density similar to a ceramic membrane under its typical intended operation conditions. Strength of bars was obtained via 4-point bending tests. Figure 1 shows the conductivity of 10Sc1 CeSZ - 6Sc1 CeSZ composites. Clearly the conductivity of the composites exhibits a percolation-type behavior. For example, the composite made with 60%10Sc1CeSZ and 40%6Sc1CeSZ has a conductivity which is 2.2x the conductivity of 6Sc1 CeSZ. Figure 2 shows the strength of the composite bars. The strength of the composite is about 60% of the strength of 6Sc1 CeSZ and about 125% of 10Sc1 CeSZ.

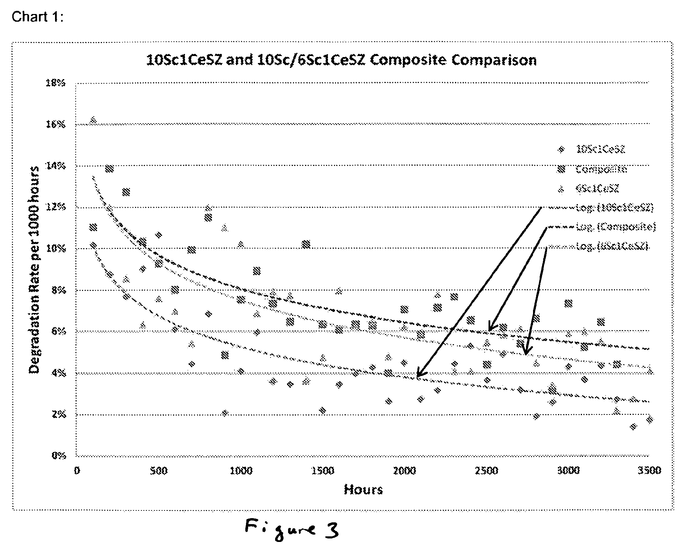

The 60% 10Sc1CeSZ - 40% 6Sc1 CeSZ composition was chosen for further evaluation as seen in Chart 1 (figure 3).

For electrolyte performance degradation, the voltage is evaluated as a function of time to generate a constant current (of oxygen ions). For Chart 1, the degradation rate (increase in voltage) was calculated for each 100 time period and reported as % degradation per 1000 hours. When this data was statistically analyzed using a t-test, there was a greater than 99% probability that the 10Sc1CeSZ degradation rate was lower than either of the other two, but there was only a 52% probability that the 6Sc1CeSZ degradation rate could be distinguished from the composite electrolyte degradation rate.

In a preferred embodiment, the invention comprises an electrolyte formed by combining Zr(0.93)Sc(0.06)Ce(0.01)O(2) and Zr(0.89)Sc(0.10)Ce(0.01)O(2) powders and sintering the resulting powder compact to a sufficient density to elimination open porosity with a ratio of the first powder to the second powder ranging from 10:1 to 1:10 by weight. The mixing of the powders is performed thoroughly to the particle size using, for example, a wet ball milling process.

Sintering to acceptable densification was calculated using the "theoretical density" of the composite material as follows.

### EXAMPLE 1:

Made from Treibacher EA80/10.2 10Sc1CeSZ Cal 975C 12 hrs after processing, then it was mixed with EA81/10.2 6Sc1CeSZ AR and processed together

### Powder not sieved

Pellets pressed in 13mm die to indicated green density (assumed 5.93 g/cc for green density calculations) Sintered in small CM 1475C 4 hrs

**58% green density (1.7093g of powder)**

| | | | | |
|---|---|---|---|---|
| dry | 1.6881 | 1.6848 | 1.6844 | 1.6847 |
| susp | 1.4575 | 1.4546 | 1.4543 | 1.4547 |
| sat | 1.6887 | 1.6853 | 1.6846 | 1.6852 |
| Density | 5.765241 | 5.766442 | 5.775086 | 5.771102 |
| %Theoretical | 97.2216 | 97.24185 | 97.38762 | 97.32045 |
| | | | | Average= 97.29288 |

This average of the measurements gives a density of about 5.77 g/cc, which is shown in the Example 1 as only being 97.3% of theoretical; however, the theoretical density used (5.93 g/cc) is actually for 6Sc1 CeSZ and not the composite. Using the rule of mixtures to calculate a theoretical density for the composite results in about 5.83 g/cc. Comparing this theoretical density to the measured values indicates approximately 99% of theoretical density was achieved for this sample which is considered to be very good and acceptable densification.

## Claims

1. A method of making an electrolyte comprising the steps of:
a) combining a first powder consisting of Zr(0.93)Sc(0.06)Ce(0.01)O(2) and a second powder consisting of Zr(0.89)Sc(0.10)Ce(0.01)O(2); and
b) sintering the resulting powder compact to a sufficient density to eliminate open porosity with a ratio of the first powder to the second powder ranging from 10:1 to 1:10 by weight.

2. A solid state electrolyte consisting of a first powder of Zr(0.93)Sc(0.06)Ce(0.01)O(2) and a second powder consisting of Zr(0.89)Sc(0.10)Ce(0.01)O(2), the first and second powders being sintered to a sufficient density to eliminate open porosity with a ratio of the first powder to the second powder ranging from 10:1 to 1:10 by weight.

3. A ceramic oxygen generation system including the solid state electrolyte of claim 2.

## Patentansprüche

1. Verfahren für die Herstellung eines Elektrolyts, umfassend die Schritte des:
a) Kombinierens eines ersten Pulvers bestehend aus Zr(0,93)Sc(0,06)Ce(0,01)O(2) und eines zweiten Pulvers bestehend aus Zr(0,89)Sc(0,10)Ce(0,01)O(2); und
b) Sinterns des resultierenden Kompaktpulvers auf eine ausreichende Dichte zum Eliminieren offener Porosität mit einem Verhältnis des ersten Pulvers zum zweiten Pulver im Bereich von 10:1 bis 1:10, auf das Gewicht bezogen.

2. Festkörperelektrolyt bestehend aus einem ersten Pulver aus Zr(0,93)Sc(0,06)Ce(0,01)O(2) und einem zweiten Pulver bestehend aus Zr(0,89)Sc(0,10)Ce(0,01)O(2), wobei die ersten und zweiten Pulver auf eine ausreichende Dichte zum Eliminieren offener Porosität mit einem Verhältnis des ersten Pulvers zum zweiten Pulver im Bereich von 10:1 bis 1:10, auf das Gewicht bezogen, gesintert werden.

3. Keramisches Sauerstofferzeugungssystem umfassend den Festkörperelektrolyten nach Anspruch 2.

## Revendications

1. Procédé de fabrication d'un électrolyte comprenant les étapes de :
a) Combinaison d'une première poudre constituée de Zr(0,93)Sc(0,06)Ce(0,01)O(2) et d'une seconde poudre constituée de Zr(0,89)Sc(0,10)Ce(0,01)O(2) ; et
b) Frittage du comprimé de poudre résultant jusqu'à une densité suffisante pour éliminer la porosité ouverte sous un rapport de la première poudre à la seconde poudre s'étendant de 10:1 1:10 en poids.

2. Electrolyte à l'état solide constitué d'une première poudre de Zr(0,93)Sc(0,06)Ce(0,01)O(2) et d'une seconde poudre constituée de Zr(0,89)Sc(0,10)Ce(0,01)O(2), la première et la seconde poudres étant frittées jusqu'à une densité suffisante pour éliminer la porosité ouverte sous un rapport de la première poudre à la seconde poudre s'étendant de 10:1 à 1:10 en poids.

3. Système en céramique de génération d'oxygène incluant l'électrolyte à l'état solide selon la revendication 2.
